# EUROPÄISCHE PATENTSCHRIFT

(11) **EP 2 421 735 B1**
(45) Veröffentlichungstag und Bekanntmachung des Hinweises auf die Patenterteilung: **25.04.2018**
(21) Anmeldenummer: 10707030.2
(22) Anmeldetag: 05.03.2010
(51) Int. Cl.: B60W 30/14, B60W 30/18

(54) **VERFAHREN ZUM BETREIBEN EINES FAHRZEUGS MIT EINEM SEGEL- BZW. ROLLMODUS**
METHOD FOR OPERATING A VEHICLE HAVING A FREEWHEEL MODE OR A ROLLING MODE
PROCÉDÉ PERMETTANT DE FAIRE FONCTIONNER UN VÉHICULE PRÉSENTANT UN MODE ROUE LIBRE AVEC OU SANS ARRÊT DU MOTEUR D'ENTRAÎNEMENT

(30) Priorität: 21.04.2009 DE 102009002521
(43) Veröffentlichungstag der Anmeldung: 29.02.2012
(73) Patentinhaber: ZF Friedrichshafen AG, 88046 Friedrichshafen (DE)
(72) Erfinder: STAUDINGER, Joachim, 88214 Ravensburg (DE); WÜRTHNER, Maik, 88677 Markdorf (DE); SAUTER, Ingo, 88074 Meckenbeuren (DE); KEMLER, Johannes, 88212 Ravensburg (DE)
(86) Internationale Anmeldenummer: PCT/EP2010/052811
(87) Internationale Veröffentlichungsnummer: WO 2010/121861

(56) Entgegenhaltungen:
- EP-A1- 1 975 029
- EP-A2- 1 923 291
- WO-A1-2005/084995
- DE-U1- 29 900 332
- GB-A- 2 452 579

## Beschreibung

Die Erfindung betrifft ein Verfahren zum Betreiben eines Fahrzeugs in einem Segel- oder Rollmodus, wobei das Fahrzeug einen Antriebsstrang mit einem ansteuerbaren Antriebsmotor, ein automatisches oder automatisiertes Getriebe und ansteuerbare Schaltmittel zur Unterbrechung eines Kraftschlusses im Antriebsstrang aufweist.

Zur Verbrauchs- und Abgasemissionsreduzierung von Kraftfahrzeugen wird die Steuerung des Antriebs fortlaufend weiterentwickelt. Eine viel versprechende Möglichkeit zur Kraftstoffersparnis besteht darin, den Kraftschluss im Antriebsstrang in geeigneten Fahrsituationen zu unterbrechen und das Fahrzeug dann temporär in einem Rollmodus mit bei Leerlaufdrehzahl drehenden Antriebsmotor zu betreiben oder sogar zusätzlich den Antriebsmotor abzuschalten und das Fahrzeug in einem so genannten Segelmodus zu bewegen. Diese Funktionen sind bereits bekannt.

Problematisch dabei ist jedoch, dass die herkömmlich herangezogenen Erkennungsmechanismen zur Bestimmung von für den Segel- bzw. Rollmodus geeigneten Fahrsituationen, die vorwiegend Auswertungen des Fahrwiderstandes und der Fahrbahnsteigung, der Fahr- und Bremspedalbewegungen, des aktuellen Geschwindigkeitsbereichs sowie der Fahrzeugbeschleunigung verwenden, häufig unzureichend sind, um den Segel-/Rollmodus stets zuverlässig und zweckmäßig einzusetzen.

Insbesondere wird bei den bekannten Steuerungsverfahren für einen Segel- bzw. Rollmodus das Fahrzeugumfeld und der Fahrzustand mittels einer vorhandenen Sensorik des Fahrzeugs, aufgrund einer eher ungefilterten oder lückenhaften Berücksichtigung von Informationen über verbrauchsrelevante Größen und/oder durch komplexe, teilweise konträr wirkende Einflüsse, nicht immer korrekt interpretiert, was zu unnötigen und kontraproduktiven Neutralschaltungen bzw. Kraftschlussunterbrechungen im Antriebstrang führen kann.

Weiterhin ist es bekannt, aus Komfort- und Verkehrs- bzw. Fahrsicherheitsgründen moderne Fahrzeuge zunehmend mit automatischen Fahrgeschwindigkeitsregelungsfunktionen oder Fahrgeschwindigkeitsfunktionen und Abstandsregelungsfunktionen auszustatten. Solche Systeme sind bereits für Personenkraftfahrzeuge und Nutzfahrzeuge verfügbar, beispielsweise als so genannter Tempomat, der eine vom Fahrer vorgegebene Wunschgeschwindigkeit herbeiführt bzw. hält, oder in dessen Erweiterung als so genannte ACC (Adaptive Cruise Control) oder ADR (Automatic Distance Regulation), welche mit Hilfe von Sensoren, beispielsweise Radar, Infrarot, Video oder Ultraschall, einen Überwachungsbereich vor dem Fahrzeug oder um das Fahrzeug herum aufbauen, wodurch zusätzlich zumindest der Abstand zum vorausfahrenden Fahrzeug durch automatisches Gaswegnehmen oder Abbremsen mittels eines autonomen Bremssystems (Bremsomat) angepasst wird.

Aus der gattungsbildenden DE 10 2004 017 115 A1 ist ein Verfahren zur automatischen Fahrgeschwindigkeitsregelung und Abstandsregelung für ein Fahrzeug mit einem automatischen bzw. automatisierten Getriebe bekannt, bei dem die Fahrgeschwindigkeit im Bereich einer vorgewählten Sollgeschwindigkeit variiert werden kann. Dabei folgt jeweils auf eine Beschleunigungsphase eine Ausrollphase, in welcher der Kraftschluss im Antriebsstrang unterbrochen werden kann, um Kraftstoff zu sparen. Bei der Abfolge der Beschleunigungs- und Ausrollphasen können mittels einer Navigationseinrichtung gewonnene topografische Daten, Daten aus einer Überwachungseinrichtung des unmittelbaren Fahrzeugumfeldes und/oder Fahrzeugparameter berücksichtigt werden. Die Beschleunigungsphasen können durch einen zusätzlich zu einem Verbrennungsmotor vorhandenen Elektromotor unterstützt werden.

Das bekannte Verfahren verwendet einen Segel- bzw. Rollmodus zur Geschwindigkeitsregelung innerhalb eines Tempomat- bzw. ACC-Systems. Als nachteilig daran wird beurteilt, dass ein eigenständig steuerbarer Segel- bzw. Rollmodus nicht vorgesehen ist. Insbesondere sind Neutralschaltungen oder Motorabschaltungen an die Vorgaben des Tempomats bzw. Bremsomats gebunden. Die Einsatzmöglichkeiten des Segel- oder Rollmodus sind somit eher begrenzt.

Aus der DE 102 21 701 A1 ist ein Steuerungsverfahren für ein Kraftfahrzeug mit einem automatisierten Getriebe bekannt, bei dem eine Kupplung geöffnet und damit der Kraftschluss im Antriebsstrang unterbrochen wird, wenn bei laufendem Motor und einer Mindestfahrgeschwindigkeit ein Gaspedal oder ein Bremspedal oder in ihrer Wirkung entsprechende Stellgrößen nicht betätigt werden. Nach dem Öffnen der Kupplung wird das Getriebe in Neutral geschaltet, so dass sich das Fahrzeug in einem Rollmodus befindet. Durch Betätigen des Gaspedals oder des Bremspedals oder durch Verändern von in ihrer Wirkung entsprechender Größen, wird die Kupplung wieder geschlossen und dadurch der Rollmodus beendet. Vor dem Schließen der Kupplung erfolgt eine Drehzahlsynchronisation zwischen dem antreibenden Verbrennungsmotor und einer Antriebswelle, um den Rollmodus möglichst komfortabel und schnell zu beenden. Weiterhin ist vorgesehen, die Kupplung nicht zu öffnen und damit den Rollmodus nicht zu aktivieren, wenn eine Fahrzeugverzögerung bevorsteht. Dies kann durch eine Bergabfahrt oder ein schnelles Gaswegnehmen erkannt werden.

Nachteilig daran ist, dass nicht immer dann, wenn das Fahrzeug weder bergab fährt noch das Gas- oder Bremspedal betätigt wird, ein Segel- oder Rollmodus sinnvoll ist. Insbesondere bleiben bei dem Verfahren vorausschauende topografische, verkehrssituationsbezogene oder fahrzeuginterne Parameter eher unberücksichtigt. Zudem ist ein kombinierter Segel- bzw. Rollbetrieb mit einem Tempomat oder Bremsomat nicht vorgesehen.

Aus der WO 2003 / 037 672 A1 ist ein Stufenschaltgetriebe, insbesondere für schwere Nutzfahrzeuge, bekannt, welches bei Erkennen eines verbrauchsarmen Fahrzustandes in Neutral, also in einen Rollmodus geschaltet wird. Ein verbrauchsarmer Fahrzustand wird dann erkannt bzw. in die Neutralstellung wird dann geschaltet, wenn eine Sollgeschwindigkeit vorgegeben ist und die Fahrgeschwindigkeit sich ohne Rollmodus verringern würde. Dies wird insbesondere dann angenommen, wenn weder Gas- noch Bremspedal betätigt sind oder äquivalente Größen sich ändern. Aus Sicherheitsgründen steht eine Zusatzbremseinrichtung zur Verfügung, deren Betätigung während des Rollbetriebes angefordert werden kann. Zudem wird der aktuell eingelegte Gang berücksichtigt. Nachteilig daran ist, dass eine vorausschauende Bewertung des Rollmodus eher nicht vorgesehen ist, wodurch ungünstige Neutralschaltungen ausgelöst werden können.

Vor diesem Hintergrund liegt der Erfindung die Aufgabe zugrunde, ein Verfahren anzugeben, das bei einem Fahrzeug mit einem automatischen bzw. automatisierten Getriebe einen verbrauchs- und emissionsarmen Fahrbetrieb mit einer effizienten, komfortablen und betriebssicheren Segel- oder Rollfunktion ermöglicht.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass eine Segel- bzw. Rollfunktion zur Kraftstoffersparnis bei einem Fahrzeug mit Hilfe einer Auswertung, die möglichst umfangreiche und detaillierte relevante Informationen über das unmittelbare Fahrzeugumfeld, die Topografie der Fahrstrecke und aktuelle Betriebsparameter des Fahrzeugs zueinander in Beziehung setzt und bewertet, zielgenau in dafür geeigneten Situationen eingesetzt werden kann.

Demnach geht die Erfindung aus von einem Verfahren zum Betreiben eines Fahrzeugs in einem Segel- oder Rollmodus, wobei das Fahrzeug einen Antriebsstrang mit einem ansteuerbaren Antriebsmotor, ein automatisches oder automatisiertes Getriebe und ansteuerbare Schaltmittel zur Unterbrechung eines Kraftschlusses im Antriebsstrang aufweist. Zur Lösung der gestellten Aufgabe sieht die Erfindung vor, dass der Segel- oder Rollmodus mit Hilfe einer Plausibilitätsprüfung einer aktuell aktiven automatischen Fahrgeschwindigkeitsregelungsfunktion oder Fahrgeschwindigkeits- und Abstandsregelungsfunktion und anderer aktueller Fahrzeugbetriebs- oder Fahrzustandsdaten oder daraus abgeleiteter Größen prognostisch aktiviert, deaktiviert oder beibehalten wird, dass bedarfsweise relevante Randbedingungen der aktiven Fahrgeschwindigkeitsregelungsfunktion oder Fahrgeschwindigkeits- und Abstandsregelungsfunktion und des Segel- bzw. Rollmodus fahrsituationsbedingt koordiniert und adaptiert werden, und dass über eine Getriebesteuerung jeweils erforderliche Steuerungsmaßnahmen eingeleitet werden.

Erfindungsgemäß erfolgt die Einleitung einer Segel- bzw. Rollphase dadurch, dass eine Unterbrechung des Kraftschlusses im Antriebsstrang während der Fahrt angefordert wird, wenn sich ein aktuell verfügbares positives Motormoment und aktuelle abgeforderte Motormomentverluste wenigstens annähernd aufheben, und wenn eine für eine Fahrt mit dem Segel- bzw. Rollmodus prognostizierte positive oder negative Beschleunigung als zulässig bewertet wird.

Unter einem Rollmodus wird das Fahren eines Fahrzeuges mit offenem Antriebstrang, d. h. eine antriebslose Vorwärtsfahrt oder Schwungnutzfahrt, bei laufendem Antriebsmotor verstanden. Unter einem Segelmodus wird das Fahren eines Fahrzeuges mit offenem Antriebstrang bei abgeschaltetem Antriebsmotor verstanden.

Durch das erfindungsgemäße Verfahren werden unnötige bzw. unerwünschte sowie möglicherweise die Betriebssicherheit beeinträchtigende Aktivierungen des Segel- bzw. Rollmodus zuverlässig vermieden. Andererseits werden geeignete Situationen für die Aktivierung der Segel- bzw. Rollfunktion zuverlässig erkannt und gegebenenfalls entsprechende Anpassungen durchgeführt. Dadurch kann der Segel- bzw. Rollmodus effizienter als bisher eingesetzt werden. Demnach werden Erweiterungen und Einschränkungen zur Segel- bzw. Rollfunktion zur Verfügung gestellt, welche die herkömmlichen Erkennungsmechanismen überlagern. Diese Erweiterungen bzw. Einschränkungen können relativ einfach über eine Getriebesteuerung, d. h. ein Getriebesteuergerät, welche an eine Motorsteuerung, also ein Motorsteuergerät, entsprechende Befehle ausgibt, umgesetzt werden. Aufwendige Eingriffe in die Software eines Tempomat- bzw. Bremsomatreglers sind dafür nicht erforderlich, was sich kostengünstig auswirkt.

Dazu werden, soweit über vorhandene Tempomat- bzw. Bremsomateinrichtungen, Navigationsgerät etc. zur Verfügung stehend, Sensorsignale aus einer Überwachung der unmittelbaren Fahrzeugumgebung sowie aus Navigationsdaten ausgewertet und einer Plausibilitätsprüfung unterzogen. Weiterhin werden auch Antriebs- und Motorparameter sowie deren Gradienten, die Informationen über das Fahrzeug selbst anzeigen berücksichtigt, insbesondere solche, die einer sinnvollen Neutralschaltung oder einem temporären Abschalten des Verbrennungsmotors aus Verbrauchs-, Verschleiß- oder Funktionsgründen eher entgegenstehen.

Demnach wird die Segel- oder Rollfunktion vorteilhaft nicht aktiviert oder deaktiviert, wenn ein bevorstehender abstandsregelungsrelevanter aktiver Bremsvorgang, eine bevorstehende abstandsregelungsrelevante Geschwindigkeitsverringerung, eine hohe Verkehrsdichte, schnell wechselnde Verkehrssituationen, eine zu kurze Segel- bzw. Rollstrecke und/oder eine relativ hügelige Fahrbahn erkannt oder prognostiziert wird. Für diese, das Fahrzeugumfeld oder die Fahrstreckentopografie betreffenden Fahrsituationen scheint die Nutzung des Segel- oder Rollbetriebes zur Kraftstoffersparnis eher nicht sinnvoll.

Die Segel- oder Rollfunktion wird vorteilhaft auch dann nicht aktiviert oder deaktiviert, wenn eine zu hohe Kühlwassertemperatur, ein akuter oder kurz bevorstehender Treibstoffmangel, ein sicherheitsrelevanter Brems- oder Motoreingriff eines Steuergerätes, ein starker Lenkeinsatz, eine relativ hohe Antriebsdrehzahl, ein laufender Motorlüfter, eine als unpassend bewertete Gangstufe, eine als unzulässig bewertete Geschwindigkeitsänderung, und/oder eine Steuergeräte-Fehlermeldung festgestellt oder vorherbestimmt wird. Bei diesen, das Fahrzeug selbst betreffenden Betriebsparametern oder daraus resultierenden Betriebsverläufen würde sich der Segel- oder Rollmodus aufgrund des fehlenden motorischen Antriebs eher ungünstig auswirken.

Die Segel- bzw. Rollfunktion kann demgegenüber vorteilhaft dadurch erweitert werden, dass im Falle, dass die Fahrgeschwindigkeitsregelungsfunktion oder Fahrgeschwindigkeits- und Abstandsregelungsfunktion aktiv ist und der Segel- bzw. Rollmodus aktiviert oder beibehalten werden soll, eine Geschwindigkeitsrandbedingung getriebesteuerungsseitig adaptiert bzw. angepasst wird, wenn eine Topografieerkennungseinrichtung eine Senke in der voraus liegenden Fahrstrecke erkennt oder prognostiziert.

Insbesondere kann dabei vorgesehen sein, dass eine bremsrelevante Zielgeschwindigkeit eines ACC-Systems für die Fahrt durch die Senke temporär erhöht wird.

Bei einem Betrieb mit einem Tempomat ohne Abstandsregelung oder einer manuellen Fahrpedalbedienung des Fahrers kann vorgesehen sein, eine wahrscheinliche Geschwindigkeitszunahme für die Fahrt durch die Senke mit dem Segel- oder Rollmodus zu berechnen, mit einem abgespeicherten, vorbestimmten Grenzwert zu vergleichen und dann gegebenenfalls den Segel- oder Rollmodus zu aktivieren.

Außerdem kann vorgesehen sein, dass bei aktivem Segel- bzw. Rollmodus ein getriebesteuerungsseitiger Eingriff in die Regelung des Antriebsmotors derart erfolgt, dass der Segel- oder Rollmodus erst dann verlassen und ein dafür zuvor unterbrochener Kraftschluss im Antriebsstrang wieder hergestellt wird, wenn die aktuelle Fahrgeschwindigkeit von einem vorgegebenen Geschwindigkeitsbereich, welcher eine Zielgeschwindigkeit der Fahrgeschwindigkeitsregelungsfunktion oder Fahrgeschwindigkeits- und Abstandsregelungsfunktion enthält, abweicht.

Dabei ist es zweckmäßig, um eine kurzzeitig überhöhte Kraftstoffeinspritzung in den Antriebsmotor durch einen Tempomatregier nach Beendigung des Segel- bzw. Rollmodus zu vermeiden, dass, nachdem der Kraftschluss im Antriebsstrang wieder hergestellt ist, bis zum Erreichen einer Zielgeschwindigkeit der Fahrgeschwindigkeitsregelungsfunktion oder der Fahrgeschwindigkeits- und Abstandsregelungsfunktion eine getriebesteuerungsseitige Motorregelung statt einer Steuerung des Verbrennungsmotors durch ein Tempomatsteuergerät erfolgt.

Um während einer Segel- bzw. Rollphase ein Abfallen der Fahrgeschwindigkeit unter eine Zielgeschwindigkeit zu ermöglichen und damit die Segel- oder Rollphase zu verlängern sowie um nach der Segel- oder Rollphase das notwendige Antriebsmoment in einem günstigeren Betriebspunkt des Verbrennungsmotor abzufordern, ist es vorteilhaft, dass eine beschleunigungsrelevante Zielgeschwindigkeit der Fahrgeschwindigkeitsregelungsfunktion oder der Fahrgeschwindigkeits- und Abstandsregelungsfunktion temporär verringert wird.

Um Reibungsverluste im auf die Neutralschaltung folgenden Leerlaufbetrieb des Antriebsmotors möglichst gering zu halten ist es zudem vorteilhaft, dass eine Kraftschlussunterbrechung durch Schalten eines im Antriebstrang motornahen Schaltmittels bzw. Schaltelementes erfolgt. Ein Anfahrelement, welches den Antriebsmotor mit dem Getriebe verbindet, bleibt dabei geschlossen, d. h. die Neutralstellung wird vorzugsweise ohne Öffnen des Anfahrelements geschaltet. Bei einem schweren Nutzfahrzeug mit einem Mehrgruppengetriebe ist es zweckmäßig, dass die Kraftschlussunterbrechung durch Schalten eines Schaltmittels einer Vorschaltgruppe bzw. einer Splittergruppe erfolgt.

Zur Verdeutlichung der Erfindung werden im Folgenden einige Szenarien beschrieben, in denen das erfindungsgemäße Verfahren angewendet wird.

Zunächst werden einige Betriebssituationen beschrieben, in denen der Segel-/Rollmodus nicht angefordert bzw. zurückgesetzt wird:
Bei einer ersten Betriebssituation befindet sich das Fahrzeug in einer Kurvenfahrt. Ein Steuergerät stellt einen relativ starken und häufigen Einsatz der Fahrzeuglenkung über eine Auswertung von Signalen von vorhandenen Raddrehzahl- und/oder Lenkwinkelsensoren fest. Eine Plausibilitätsprüfung ergibt, dass sich das Fahrzeug entweder im Stadtverkehr oder auf einer sehr kurvigen Wegstrecke, beispielsweise auf einer Serpentinen-Straße, befindet. Herkömmlicherweise könnten hier auf flachen und/oder geraden Fahrbahnabschnitten kurzeitige Rollphasen ausgelöst werden, die aber offensichtlich nicht sinnvoll wären, da ein häufiger Bremseinsatz zu erwarten ist, der durch die Motorbremswirkung des Antriebsmotors unterstützt werden sollte. Erfindungsgemäß wird daher bei diesem Szenario der Segel- bzw. Rollmodus nicht aktiviert. Insbesondere wird diese Funktion durch ein Schaltprogramm des automatischen bzw. automatisierten Getriebes nicht angefordert oder, falls der Segel- bzw. Rollmodus zuvor aktiviert war, wird die Funktion wieder zurückgesetzt und der Kraftschluss im Antriebsstrang wiederhergestellt, also ein Gang wieder eingelegt.

Bei einer zweiten Betriebssituation wird ein vorausfahrendes Fahrzeug über Sensoren eines aktiven ACC-Steuergerätes oder über getriebeeigene Sensoren erkannt, wobei sich der Abstand zum dem vorausfahrenden Fahrzeug verringert. Erfindungsgemäß wird auf eine kurz bevorstehende Ansteuerung oder Betätigung der Betriebsbremse geschlossen. Da die Motorbremswirkung die Betriebsbremse sinnvollerweise unterstützen soll, bleibt bzw. wird der Antriebsstrang geschlossen und damit der Segel- bzw. Rollmodus außer Kraft gesetzt. In analoger Weise dazu kann sich das Fahrzeug bei aktivem ACC-System im Abstandsregelbetrieb befinden, wobei die Geschwindigkeit eines vorausfahrenden Fahrzeuges, beispielsweise 60 km/h, geringer ist als die vorgegebene Sollgeschwindigkeit des eigenen Fahrzeugs, beispielsweise 80 km/h.

Bei einer weiteren Betriebssituation wird über eine Auswertung von ACC-Abstandssensoren oder über Informationen eines Navigationssystems (beispielsweise GPS) erkannt, dass sich das Fahrzeug in zu dichtem Verkehr, also im Stau befindet. Hier ist es ebenfalls nicht sinnvoll den Segel- oder Rollmodus zu verwenden. Da in dieser Fahrsituation ein häufiges Anfahren und Abbremsen zu erwarten ist, ist es plausibel die Motorbremswirkung und damit eine mögliche kraftstoffsparende Schubabschaltung zu nutzen.

Bei einer weiteren Betriebssituation wird über eine Auswertung von Navigationsdaten (GPS) erkannt, dass sich das Fahrzeug im Stadtverkehr befindet. Im Stadtverkehr ist die Aktivierung einer Segel- oder Rollfunktion eher nicht sinnvoll, da häufig beschleunigt und abgebremst werden muss. Im Bremsbetrieb sollte vorzugsweise die Motorbremswirkung mit genutzt werden, auch weil hier wegen der Schubabschaltung kein Treibstoff verbraucht wird. Der Segel- oder Rollmodus wird daher auch im Stadtverkehr vorzugsweise deaktiviert.

Bei einer weiteren Betriebssituation befindet sich das Fahrzeug in einem stark hügeligen Gelände. Dies kann beispielsweise über eine Ebenenerkennungsfunktion mittels einer Vergangenheitsbetrachtung festgestellt werden. Dazu werden über ein Steigungs- bzw. Neigungssensor oder über berechnete Steigungs- bzw. Fahrwiderstandsignale die durch das Fahrzeug befahrenen Steigungen bewertet. Bei starkem Gefälle und bei starker Steigung wird ein Zäher inkrementiert. Bei einer Fahrt in der Ebene wird der Zähler dekrementiert. Erreicht der Zählerstand einen oberen Schwellwert, so wird auf das Befahren eines hügeligen Geländes geschlossen. Die Segel- bzw. Rollfunktion wird in dieser Fahrsituation sinnvollerweise deaktiviert, um häufiges kurz hintereinander folgendes Gangauslegen und Gangeinlegen zu vermeiden. Die Segel- bzw. Rollfunktion wird erst dann wieder aktiviert, wenn sich das Fahrzeug längere Zeit in der Ebene befindet und dies durch einen Zählerstand unterhalb eines zweiten Schwellwertes festgestellt wird.

Ein hügeliges Gelände kann auch über eine Auswertung von Navigationsdaten erkannt werden. Ein geeignetes Getriebesteuerungssystem kann die vor dem Fahrzeug befindliche Strecke aus Höhendaten, Neigungsdaten etc. bewerten und daraus die durchschnittliche Steigung und das durchschnittliche Gefälle berechnen. Ist dieser Mittelwert größer oder kleiner als ein Schwellwert, wird die Segel- bzw. Rollfunktion ebenfalls abgeschaltet.

Bei einer weiteren Betriebssituation befindet sich ein Lastkraftwagen nach einer längeren Gefällefahrt mit Einsatz einer zusätzlichen Dauerbremseinrichtung (Sekundärretarder) nun auf einem Abschnitt mit leichterem Gefälle, das in eine Ebene übergeht. Die Kühlwassertemperatur des Verbrennungsmotors ist aufgrund der Nutzung der Dauerbremseinrichtung stark angestiegen. Der Segel- bzw. Rollmodus könnte nun entsprechend der geeigneten Topgrafie an sich aktiviert werden. Um die Kühlwassertemperatur des Verbrennungsmotors zu verringern ist es aber eher zweckmäßig, den Antrieb nicht zu unterbrechen, da eine zur Motorkühlung eingesetzte Kühlwasserpumpe sich schneller dreht, d. h. effektiver arbeitet, wenn der Motor an den Antriebsstrang gekoppelt ist, als wenn sich der Motor im Leerlauf befindet oder gar abgestellt ist. Dementsprechend wird der Segel- bzw. Rollmodus in dieser Betriebssituation nicht aktiviert.

In einer weiteren Betriebssituation hat die Motordrehzahl nach einer längeren Gefällefahrt eines Nutzfahrzeuges einen Schwellwert, beispielsweise 1400 U/min, überschritten. Während der Gefällefahrt wurde die Nutzung einer Dauerbremseinrichtung angefordert. Dazu wurde eine Rückschaltung zur Einstellung höherer Motordrehzahlen, beispielsweise 2000 U/min, ausgelöst, um die Kühlleistung zu erhöhen. Eine Neutralschaltung des Getriebes und damit der Segel- bzw. Rollmodus wird hierbei unterdrückt und erst wieder freigegeben, wenn eine Hochschaltung erfolgt ist, was in der Regel den Übergang in einen Zugbetrieb voraussetzt.

Bei einer weiteren Betriebssituation ist nach einer längeren starken Gefällstrecke mit einem Einsatz eines Sekundärretarders oder der Motorbremse ein Lüfter des Motors im Betrieb. Der Segel- bzw. Rollmodus wird temporär deaktiviert, wobei ein Getriebesteuerungssystem laufend, beispielsweise über einen CAN-Bus, die Drehzahl bzw. den Betriebsstatus des Motorlüfters einliest und die Segel- bzw. Rollfunktion zu einem gegeben Zeitpunkt wieder freigibt.

In einer weiteren Betriebssituation wird über eine Auswertung von Navigationsdaten (GPS) erkannt, dass ein vor dem Fahrzeug liegendes Gefälle zu kurz für die Aktivierung einer Segel- bzw. Rollfunktion sein wird. Dies könnte beispielsweise der Fall sein, wenn zwar das Gefälle für eine Segel- bzw. Rollphase an sich als passend erkannt wurde, aber in kurzer Distanz, beispielsweise in 30 Meter Entfernung vor dem Fahrzeug, eine drastische Geschwindigkeitsverringerung bevorsteht, beispielsweise an einem Verkehrszeichen (Stopp-Schild) oder einer Lichtzeichenanlage (rote Ampel). Eine Aktivierung einer Segel- bzw. Rollfunktion wird in dieser Betriebssituation nicht zugelassen.

In einer anderen Betriebssituation eines Nutzfahrzeuges kann das momentane Gefälle für eine Segel- bzw. Rollphase zwar als passend aber in kurzer Distanz als so stark abschüssig werdend erkannt worden sein, dass voraussichtlich über eine Zusatzbremseinrichtung (Sekundärretarder) und eine Motorbremse abgebremst werden muss. Eine Aktivierung einer Segel- bzw. Rollfunktion wird auch in dieser Betriebssituation nicht zugelassen.

Bei einer weiteren Betriebssituation wird ein Treibstoffmangel erkannt. Beispielsweise liegt das Treibstoffniveau unter einem Schwellwert oder es wurde bereits auf Reserve umgeschaltet oder eine getriebeeigene Funktion hat aufgrund des Drehzahlverhaltens des Verbrennungsmotors bei einem Schaltvorgang auf einen Treibstoffmangel geschlossen. Der Motor könnte beim Öffnen des Antriebsstranges ausgehen oder nach der Beendigung einer Segelphase nicht mehr gestartet werden können. Aus Sicherheitsgründen wird die Segel- oder Rollfunktion daher deaktiviert bzw. deren Aktivierung nicht zugelassen.

Bei einer weiteren Betriebssituation registriert ein Getriebesteuergerät eine Fehlermeldung. Der Antriebsstrang bleibt oder wird vorsorglich geschlossen, so dass keine Segel- oder Rollphase des Fahrzeugs stattfinden kann.

Bei einer weiteren Betriebssituation greift ein Steuergerät eines Sicherheits- oder Stabilitätssystems, beispielsweise ABS (Antiblockiersystem), ASR (Antriebsschlupfregelung), VDC (Vehicle Dynamic Control), ESP (Elektronisches Stabilitätsprogramm), aktiv in die Steuerung einer Bremseinrichtung oder in eine Motorsteuerung ein. Die Segel- bzw. Rollfunktion wird in einer solchen Betriebssituation zumindest während des direkten Eingriffs deaktiviert bzw. kein Start einer Segel- oder Rollphase zugelassen.

In einer anderen Betriebssituation befindet sich das Fahrzeug in einem relativ niedrigen Gang. Die Aktivierung des Segel- bzw. Rollmodus wird abhängig von der aktuellen Gangstufe freigegeben. Beispielsweise ist bei einem Fahrzeug mit einem Gruppengetriebe festgelegt, dass eine Neutralschaltung während der Fahrt erst dann erfolgt, wenn ein bestimmter einstellbarer Gang, beispielsweise ein 12. Gang, erreicht wurde.

In einer weiteren Betriebssituation erhöht oder verringert sich die Fahrgeschwindigkeit während einer Segel- oder Rollphase relativ stark. Eine Deaktivierung des Segel- oder Rollmodus, d. h. es wird wieder ein Getriebegang eingelegt, ist dann in einer solchen Betriebssituation vorgesehen, in der sich die Geschwindigkeit des Fahrzeugs um mehr als eine festgelegte Toleranzschwelle ändert, während das Getriebe in Neutral geschaltet ist.

Im Folgenden werden Betriebssituationen beschrieben, in denen die Aktivierung bzw. Deaktivierung des Segel- bzw. Rollmodus insbesondere hinsichtlich eines Tempomats- bzw. Bremsomats erfindungsgemäß erweitert ist:
Bei einer Betriebssituation erkennt eine Getriebesteuerung über eine Topographieerkennung (beispielsweise GPS) eine Senke, d. h. zuerst ein Gefälle und anschließend eine Steigung. Daraufhin löst die Getriebesteuerung eine Neutralschaltung aus, um die Segel- bzw. Rollfunktion zu nutzten. Erfindungsgemäß wird zeitgleich die Zielgeschwindigkeit eines aktiven Bremsomats durch ein Getriebesteuergerät bis zu einer einstellbaren maximalen Geschwindigkeitszunahme kurzzeitig erhöht, wobei ein Fahrerwunsch kurzzeitig überstimmt wird, damit das Fahrzeug Geschwindigkeit und damit Schwung für die kommende Steigungsfahrt gewinnt.

Bei einer vergleichbaren Betriebssituation, bei der nur ein Tempomat, also keine Abstandregelung, aktiv ist bzw. bei einer Fahrerbedienung über ein Fahrpedal, wird über die prognostizierte Steigung des Gefälles bis zum nächsten vor dem Fahrzeug liegenden Anstieg vorausberechnet, wie stark das Fahrzeug bei einem Rollbetrieb an Geschwindigkeit gewinnen wird. Dieser Wert wird mit einem abgespeicherten Grenzwert verglichen. Ist die voraussichtliche Geschwindigkeitszunahme kleiner oder gleich dem Grenzwert, so wird die Neutralschaltung ausgelöst. Der Grenzwert kann beispielsweise anhand einer Tempomat-Zielgeschwindigkeit oder über die letzte aktuelle Geschwindigkeit vor dem Auslösen einer Neutralschaltung bestimmt werden.

Schließlich wird auf die getriebsteuerungsseitige Regelung der Segel- bzw. Rollfunktion hinsichtlich eines Tempomats näher eingegangen:
Bei aktiver Segel- oder Rollfunktion wird die jeweilige tempomatinterne Zielgeschwindigkeit verringert. Dies kann insbesondere mittels einer Anforderung eines Getriebesteuergerätes erfolgen. Dadurch wird während der Segel- bzw. Rollphase ein Abfallen der Fahrgeschwindigkeit unter eine Zielgeschwindigkeit des Tempomats zugelassen und somit diese Segel- bzw. Rollphase verlängert. Nach der Beendigung der Segel- bzw. Rollphase wird dann ein vergleichsweise höheres Motormoment benötigt. Ein zugehöriger Motorlastpunkt befindet sich nun jedoch bei einer höheren Lastabforderung in einem günstigeren Verbrauchsbereich.

Ist durch ein Automatikprogramm das Getriebe in Neutral geschaltet, so erfolgt über ein Getriebesteuergerät ein Eingriff in die Steuerung des Antriebsmotors, der dazu führt, dass der Tempomat vorübergehend kein Motormoment anfordern kann. Erst wenn die aktuelle Geschwindigkeit um einen bestimmten Wert unter bzw. über einer gesetzten Tempomatgeschwindigkeit liegt, erfolgt ein Gangeinlegen und eine Rücknahme des Motoreingriffs durch das Getriebesteuergerät. Erst nach der Beendigung einer Rollphase erhält ein Steuergerät des Tempomats wieder den Zugriff auf die Motorsteuerung.

Dabei bestimmt das Getriebesteuergerät die Motorsteuerung vorteilhaft so lange, bis die interne Zielgeschwindigkeit des Tempomat erreicht ist. Ansonsten würde der Tempomat aufgrund dessen, dass er eine Differenzgeschwindigkeit zu seiner Zielgeschwindigkeit registriert, von einem Motorsteuergerät eine entsprechende Erhöhung einer Kraftstoffeinspritzmenge des Verbrennungsmotors anfordern. Da diese Erhöhung jedoch nicht erfolgt, da das Getriebesteuergerät den Segel- bzw. Rollmodus aktiviert und alleine den Zugriff auf die Motorsteuerung hat, würde sich der zunehmende Abfall unter die Zielgeschwindigkeit zu einer immer höheren Einspritzmengenanforderung aufsummieren. Bei Beendigung des Segel- bzw. Rollmodus würde dies zu einer schlagartig erhöhten und unpassenden Einspritzmenge führen. Daher ist es zweckmäßig, dass das Getriebe- oder Motorsteuergerät nach dem Segel- bzw. Rollbetrieb zunächst die Fahrzeuggeschwindigkeit eigenständig an die Sollgeschwindigkeit des Tempomats heranführt und anschließend die Sollgeschwindigkeitsvorgabe wieder an das Tempomat-Steuergerät übergibt.

## Patentansprüche

1. Verfahren zum Betreiben eines Fahrzeugs in einem Segel- oder Rollmodus, wobei unter einem Segelmodus das Fahren eines Fahrzeuges mit offenem Antriebstrang bei abgeschalteten Antriebsmotor und unter einem Rollmodus das Fahren eines Fahrzeuges mit offenem Antriebstrang bei laufendem Antriebsmotor verstanden wird, wobei das Fahrzeug einen Antriebsstrang mit einem ansteuerbaren Antriebsmotor, ein automatisches oder automatisiertes Getriebe und ansteuerbare Schaltmittel zur Unterbrechung eines Kraftschlusses im Antriebsstrang aufweist, wobei der Segel- oder Rollmodus mit Hilfe einer Plausibilitätsprüfung einer aktuell aktiven automatischen Fahrgeschwindigkeitsregelungsfunktion oder Fahrgeschwindigkeits- und Abstandsregeiungsfunktion und anderer aktueller Fahrzeugbetriebs- oder Fahrzustandsdaten oder daraus abgeleiteter Größen prognostisch aktiviert, deaktiviert oder beibehalten wird, wobei bedarfsweise relevante Randbedingungen der aktiven Fahrgeschwindigkeitsregelungsfunktion oder Fahrgeschwindigkeits- und Abstandsregelungsfunktion und des Segel- bzw. Rollmodus fahrsituationsbedingt koordiniert und adaptiert werden, und wobei über eine Getriebesteuerung jeweils erforderliche Steuerungsmaßnahmen eingeleitet werden, **dadurch gekennzeichnet, dass** eine Unterbrechung des Kraftschlusses im Antriebsstrang während der Fahrt angefordert wird, wenn sich ein aktuell verfügbares positives Motormoment und aktuelle abgeforderte Motormomentverluste wenigstens annähernd aufheben, und wenn eine für eine Fahrt mit dem Segel- bzw. Rollmodus prognostizierte positive oder negative Beschleunigung als zulässig bewertet wird.

2. Verfahren nach Anspruch 1, **dadurch gekennzeichnet, dass** die Segel- oder Rollfunktion nicht aktiviert oder deaktiviert wird, wenn bei einer aktuell aktiven automatischen Fahrgeschwindigkeits- und Abstandsregelungsfunktion wenigstens eine der folgenden vom Fahrzeugumfeld oder der Fahrstreckentopografie bedingten Situationen erkannt oder prognostiziert wird:
- bevorstehender abstandsregelungsrelevanter aktiver Bremsvorgang,
- bevorstehende abstandsregelungsrelevante Geschwindigkeitsverringerung,
- hohe Verkehrsdichte,
- schnell wechselnde Verkehrssituationen,
- kurze Segel- bzw. Rollstrecke,
- hügeligen Fahrbahn.

3. Verfahren nach Anspruch 1 oder 2, **dadurch gekennzeichnet, dass** die Segel- bzw. Rollfunktion nicht aktiviert oder deaktiviert wird, wenn wenigstens eine der folgenden durch den Fahrzeugantrieb bedingten Situationen erkannt oder prognostiziert wird:
- hohe Kühlwassertemperatur,
- Treibstoffmangel,
- sicherheitsrelevanter Brems- oder Motoreingriff eines Steuergerätes,
- starker Lenkeinsatz,
- hohe Antriebsdrehzahl,
- aktiver Motorlüfter,
- unpassende Gangstufe,
- unzulässige Geschwindigkeitsänderung,
- Steuergeräte-Fehlermeldung.

4. Verfahren nach einem der Ansprüche 1 bis 3, **dadurch gekennzeichnet, dass** im Falle, dass die Fahrgeschwindigkeitsregelungsfunktion oder die Fahrgeschwindigkeits- und Abstandsregelungsfunktion aktiv ist und der Segel- bzw. Rollmodus aktiviert oder beibehalten werden soll, eine Geschwindigkeitsrandbedingung getriebesteuerungsseitig adaptiert wird, wenn eine Topografieerkennungseinrichtung eine Senke in der voraus liegenden Fahrstrecke erkennt oder prognostiziert.

5. Verfahren nach Anspruch 4, **dadurch gekennzeichnet, dass** eine bremsrelevante Zielgeschwindigkeit der Fahrgeschwindigkeits- und Abstandsregelungsfunktion für die Fahrt durch die Senke temporär erhöht wird.

6. Verfahren nach Anspruch 4, **dadurch gekennzeichnet, dass** eine Geschwindigkeitszunahme für die Fahrt durch die Senke mit dem Segel- bzw. Rollmodus berechnet, mit einem abgespeicherten, vorbestimmten Grenzwert verglichen und gegebenenfalls der Segel- bzw. Rollmodus aktiviert wird.

7. Verfahren nach einem der Ansprüche 1 bis 6, **dadurch gekennzeichnet, dass** bei aktivem Segel- bzw. Rollmodus ein getriebesteuerungsseitiger Eingriff in die Regelung des Antriebsmotors erfolgt, derart, dass der Segel-bzw. Rollmodus erst dann verlassen und ein dafür zuvor unterbrochener Kraftschluss im Antriebsstrang wieder hergestellt wird, wenn die aktuelle Fahrgeschwindigkeit von einem vorgegebenen Geschwindigkeitsbereich, welcher eine Zielgeschwindigkeit der Fahrgeschwindigkeitsregelungsfunktion oder der Fahrgeschwindigkeits- und Abstandsregelungsfunktion enthält, abweicht.

8. Verfahren nach Anspruch 7, **dadurch gekennzeichnet, dass** bei Beendigung des Segel- bzw. Rollmodus, nachdem der Kraftschluss im Antriebsstrang wieder hergestellt ist, bis zum Erreichen einer Zielgeschwindigkeit der Fahrgeschwindigkeitsregelungsfunktion oder der Fahrgeschwindigkeits- und Abstandsregelungsfunktion eine getriebesteuerungsseitige Motorregelung erfolgt.

9. Verfahren nach einem der Ansprüche 1 bis 8, **dadurch gekennzeichnet, dass** eine beschleunigungsrelevante Zielgeschwindigkeit der Fahrgeschwindigkeitsregelungsfunktion oder der Fahrgeschwindigkeits- und Abstandsregelungsfunktion temporär verringert wird.

10. Verfahren nach Anspruch 1, **dadurch gekennzeichnet, dass** eine Kraftschlussunterbrechung durch Schalten eines im Antriebstrang motornahen Schaltmittels erfolgt, wobei ein Anfahrelement, welches den Antriebsmotor mit dem Getriebe verbindet, geschlossen bleibt.

11. Verfahren nach Anspruch 10, **dadurch gekennzeichnet, dass** bei einem Fahrzeug mit einem Mehrgruppengetriebe eine Kraftschlussunterbrechung durch Schalten eines Schaltmittels einer Vorschaltgruppe erfolgt.

## Claims

1. Method for operating a vehicle in a freewheeling mode or rolling mode, wherein the freewheeling mode is understood to be driving a vehicle with an open drive train with the drive engine switched off, and rolling mode is understood to be driving a vehicle with an open drive train with the drive engine switched on, wherein the vehicle has a drive train with a controllable drive engine, an automatic or automated transmission and controllable switching means for interrupting a power transmission in the drive train, wherein the freewheeling mode or rolling mode is predictively activated, deactivated or maintained with the aid of a plausibility check of a currently active automatic cruise control function or adaptive cruise control function and other current vehicle operating data or driving state data or variables derived therefrom, wherein relevant peripheral conditions of the active cruise control function or adaptive cruise control function and of the freewheeling mode or rolling mode are coordinated and adapted in a driving-situation-related fashion as required, and wherein respectively necessary control measures are initiated by means of a transmission controller, **characterized in that** an interruption in the power transmission in the drive train is requested during travel if a currently available positive engine torque and currently requested engine torque losses at least approximately cancel one another out and if a positive or negative acceleration which is predicted for travel with the freewheeling mode or rolling mode is evaluated as permissible.

2. Method according to Claim 1, **characterized in that** the freewheeling or rolling function is not activated or deactivated if at least one of the following situations which are brought about by the vehicle surroundings or the route topography is detected or predicted when an automatic adaptive cruise control function is active:
- imminent distance-control-relevant active braking process,
- imminent distance-control-relevant reduction in speed,
- high traffic density,
- rapidly changing traffic situations,
- brief freewheeling distance or rolling distance, and
- hilly roadway.

3. Method according to Claim 1 or 2, **characterized in that** the freewheeling or rolling function is not activated or deactivated if at least one of the following situations which are brought about by the vehicle drive is detected or predicted:
- high cooling water temperature,
- lack of fuel,
- safety-relevant braking intervention or engine intervention of a control unit,
- strong steering deployment,
- high drive rotational speed,
- active engine vent,
- unsuitable gear speed,
- unacceptable change in speed,
- control unit fault message.

4. Method according to one of Claims 1 to 3, **characterized in that** if the cruise control function or the adaptive cruise control function is active and the freewheeling mode or rolling mode is to be activated or maintained, a peripheral speed condition is adapted on the transmission control side if a topography detection device detects or predicts a depression in the route lying ahead.

5. Method according to Claim 4, **characterized in that** a braking-relevant target speed of the adaptive cruise control function is increased temporarily for the travel through the depression.

6. Method according to Claim 4, **characterized in that** an increase in speed for the travel through the depression is calculated with the freewheeling or rolling mode, compared with a stored, predetermined limiting value and, if appropriate, the freewheeling or rolling mode is activated.

7. Method according to one of Claims 1 to 6, **characterized in that** when the freewheeling or rolling mode is active an intervention on the transmission-control side is carried out into the regulation of the drive engine in such a way that the freewheeling or rolling mode is not exited and a power transmission which is interrupted in advance for this purpose in the drive train is not restored until the current velocity differs from a predefined speed range which contains a target speed of the cruise control function or of the adaptive cruise control function.

8. Method according to Claim 7, **characterized in that** when the freewheeling or rolling mode is ended after the power transmission in the drive train is restored, regulation of the engine on the transmission control side is carried out until a target speed of the cruise control function or of the adaptive cruise control function is reached.

9. Method according to one of Claims 1 to 8, **characterized in that** an acceleration-relevant target speed of the cruise control function or of the adaptive cruise control function is reduced temporarily.

10. Method according to Claim 1, **characterized in that** an interruption in the power transmission is carried out by shifting a shifting means which is near to the engine in the drive train, wherein a starter element which connects the drive engine to the transmission remains closed.

11. Method according to Claim 10, **characterized in that** in the case of a vehicle with a multi-group transmission an interruption in the power transmission is carried out by shifting a shifting means of a splitter group.

## Revendications

1. Procédé permettant de faire fonctionner un véhicule selon un mode roue libre ou roulage, dans lequel on entend par un mode roue libre la conduite d'un véhicule avec la chaîne cinématique ouverte et le moteur d'entraînement coupé et par un mode roulage la conduite d'un véhicule avec la chaîne cinématique ouverte et le moteur d'entraînement tournant, dans lequel le véhicule présente une chaîne cinématique avec un moteur d'entraînement pouvant être commandé, une boîte de vitesses automatique ou automatisée et des moyens de changement de vitesse pouvant être commandés pour l'interruption d'une liaison dynamique dans la chaîne cinématique, dans lequel on active, on désactive ou on maintient par pronostic le mode roue libre ou le mode roulage à l'aide d'un contrôle de plausibilité d'une fonction automatique actuellement active de régulation de la vitesse de circulation ou d'une fonction de régulation de la vitesse de circulation et de régulation de la distance et d'autres données actuelles de fonctionnement du véhicule ou de données de conduite ou de grandeurs déduites de celles-ci, dans lequel on coordonne et on adapte si nécessaire en fonction de la situation de circulation des conditions aux limites pertinentes de la fonction active de régulation de la vitesse de circulation ou de régulation de la vitesse de circulation et de régulation de la distance et du mode roue libre ou du mode roulage, et dans lequel on introduit par une commande de la boîte de vitesses les mesures de commande respectivement nécessaires, **caractérisé en ce que** l'on demande une interruption de la liaison dynamique dans la chaîne cinématique pendant la conduite lorsqu'un couple moteur positif actuellement disponible et des pertes de couple moteur actuellement exigées disparaissent au moins approximativement, et lorsque l'on exploite comme fiable une accélération positive ou négative pronostiquée pour une circulation en mode roue libre ou en mode roulage.

2. Procédé selon la revendication 1, **caractérisé en ce que** la fonction roue libre ou la fonction roulage n'est pas activée ou est désactivée lorsque, avec une fonction automatique actuellement active de régulation de la vitesse de circulation et de régulation de la distance, on identifie ou on pronostique au moins une des situations dues à l'environnement du véhicule ou à la topographie du parcours:
- opération de freinage active imminente pertinente pour la régulation de la distance,
- diminution de vitesse imminente pertinente pour la régulation de la distance,
- forte densité de trafic,
- situations de trafic changeant rapidement,
- courte distance de roue libre ou de roulage,
- chaussée vallonnée.

3. Procédé selon la revendication 1 ou 2, **caractérisé en ce que** la fonction roue libre ou roulage n'est pas activée ou est désactivée, lorsque l'on identifie ou on pronostique au moins une des situations suivantes dues à l'entraînement du véhicule:
- température élevée de l'eau de refroidissement,
- manque de carburant,
- action d'un appareil de commande sur le frein ou le moteur pertinente pour la sécurité,
- fort braquage,
- nombre de tours élevé du moteur,
- ventilateur du moteur actif,
- rapport de vitesse inadapté,
- variation de vitesse inacceptable,
- message d'erreur d'un appareil de commande.

4. Procédé selon l'une quelconque des revendications 1 à 3, **caractérisé en ce que**, dans le cas où la fonction de régulation de la vitesse de circulation ou la fonction de régulation de la vitesse de circulation et de la distance est active et où le mode roue libre ou roulage doit être activé ou maintenu, on adapte une condition aux limites de la vitesse du côté de la commande de la boîte de vitesses, lorsqu'un dispositif d'identification de la topographie identifie ou prévoit une vallée dans le prochain parcours.

5. Procédé selon la revendication 4, **caractérisé en ce que** l'on augmente temporairement une vitesse visée pertinente pour le freinage de la fonction de régulation de la vitesse de circulation et de la distance pour la circulation à travers la vallée.

6. Procédé selon la revendication 4, **caractérisé en ce que** l'on calcule une augmentation de la vitesse pour la circulation à travers la vallée avec le mode roue libre ou roulage, on la compare à une valeur limite prédéterminée mémorisée et l'on active éventuellement le mode roue libre ou roulage.

7. Procédé selon l'une quelconque des revendications 1 à 6, **caractérisé en ce que**, lorsque le mode roue libre ou roulage est actif, on effectue une intervention du côté de la commande de la boîte de vitesses dans la régulation du moteur d'entraînement, de telle manière que le mode roue libre ou roulage ne soit abandonné et qu'une liaison dynamique préalablement interrompue pour celui-ci ne soit de nouveau établie dans la chaîne cinématique que lorsque la vitesse de circulation actuelle s'écarte d'une plage de vitesse prédéterminée, qui contient une vitesse visée de la fonction de régulation de la vitesse de circulation ou de la fonction de régulation de la vitesse de circulation et de la distance.

8. Procédé selon la revendication 7, **caractérisé en ce qu'**à la fin du mode roue libre ou roulage, après que la liaison dynamique dans la chaîne cinématique ait de nouveau été établie, on opère une régulation du moteur du côté de la commande de la boîte de vitesses jusqu'à atteindre une vitesse visée de la fonction de régulation de la vitesse de circulation ou de la fonction de régulation de la vitesse de circulation et de la distance.

9. Procédé selon l'une quelconque des revendications 1 à 8, **caractérisé en ce que** l'on diminue temporairement une vitesse visée pertinente pour l'accélération de la fonction de régulation de la vitesse de circulation ou de la fonction de régulation de la vitesse de circulation et de la distance.

10. Procédé selon la revendication 1, **caractérisé en ce que** l'on opère une interruption de la liaison dynamique par commutation d'un moyen de changement de vitesse proche du moteur dans la chaîne cinématique, dans lequel un élément de démarrage, qui relie le moteur d'entraînement à la boîte de vitesses, reste fermé.

11. Procédé selon la revendication 10, **caractérisé en ce que**, dans un véhicule avec une boîte de vitesses à plusieurs groupes, on effectue l'interruption de la liaison dynamique par commutation d'un moyen de changement de vitesse d'un groupe de tête.
